**Europäisches Patentamt**

**European Patent Office**

**Office européen des brevets**

(19)

(11) Veröffentlichungsnummer: **0 318 871 B1**

## EUROPÄISCHE PATENTSCHRIFT

(12)

(45) Veröffentlichungstag der Patentschrift: **29.04.92**

(51) Int. Cl.⁵: **B62D 33/06**, B60R 15/02

(21) Anmeldenummer: **88119723.0**

(22) Anmeldetag: **25.11.88**

(54) **Klappbares Waschbecken in einem Fahrzeug, insbesonere in einem Lkw-Fahrerhaus.**

(30) Priorität: **28.11.87 DE 3740484**

(43) Veröffentlichungstag der Anmeldung:
**07.06.89 Patentblatt 89/23**

(45) Bekanntmachung des Hinweises auf die
Patenterteilung:
**29.04.92 Patentblatt 92/18**

(84) Benannte Vertragsstaaten:
**DE ES FR GB IT NL SE**

(56) Entgegenhaltungen:
**EP-A- 0 190 716**
**DE-A- 2 841 549**
**FR-A- 2 563 417**

(73) Patentinhaber: **Iveco Magirus Aktiengesell-schaft**
**Schillerstrasse 2 Postfach 27 40**
**W-7900 Ulm/Donau(DE)**

(72) Erfinder: **Hannig, Martin**
**Heimstrasse 27**
**W-7900 Ulm(DE)**
Erfinder: **Cameron, Ian**
**Robert-Stolz-Strasse 11**
**W-7910 Neu-Ulm(DE)**

(74) Vertreter: **Socha, Peter, Dipl.-Ing.**
**Iveco Magirus AG Patentabteilung Schiller-strasse 2**
**W-7900 Ulm(DE)**

**Beschreibung**

Die Erfindung betrifft ein klappbares Waschbecken gemäß Oberbegriff des Anspruchs 1.

Aus DE-C-26 17 941 ist ein Lastkraftwagen-Fahrerhaus bekannt, bei dem eine fest installierte Wasch- oder Spülmöglichkeit zwischen den Fahrersitzen vorgesehen ist. Die Wasch- oder Spülmöglichkeit nimmt vergleichsweise großen Raum ein, der nicht anderweitig genutzt werden kann. Im übrigen ist sie von der Beifahrersitz- oder Fahrersitzseite her nicht optimal benutzbar. Darüber hinaus kennt man provisorische Waschplätze in Form klappbarer Waschbecken in Lkw-Fahrerhäusern, die aufgrund ihres Kompromißcharakters entweder selbst nicht optimal benutzbar sind oder andere Funktionen beeinträchtigen.

Aufgabe der Erfindung ist die Schaffung eines klappbaren Waschbeckens der eingangs genannten Art, bei dem mit Hilfe einfacher Mittel ein Waschplatz für eine Benutzungsperson in das Gesamtkonzept der Nutzung eines Fahrzeugraumes in der Art eingebunden wird, daß er zusätzliche Funktionen in diesem Bereich nicht behindert, selbst aber bei Bedarf in einfacher Weise zugänglich ist und optimal bedient werden kann.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Ansprüche 2 bis 20.

Wesen der Erfindung ist die Kombination eines hochklappbaren Klappelements, an welchem unterseitig ein Waschbecken bzw. eine Spüle angelenkt ist, das bzw. die bei hochgeklapptem Klappelement in eine im wesentlichen horizontale Benutzungslage heruntergeschwenkt werden kann. Das Klappelement ist insbesondere ein Klapptisch, der an einer im wesentlichen vertikalen Fahrzeugwand befestigt ist. Insbesondere befindet sich das Klappelement bzw. der Klapptisch auf der Beifahrersitzseite fahrerhausrückseitig in einer Befestigung an der Fahrerhausrückwand.

Mit Vorzug ist im hinteren Bereich des Fahrerhauses eine (untere) Querliege vorgesehen, die an der Rückwand des Fahrerhauses hochklappbar befestigt ist. In dieser Ausführungsvariante befindet sich die erfindungsgemäße Kombination aus Klapptisch und klappbarem Waschbecken an der Unterseite der Querliege auf der Beifahrersitzseite. Im hochgeklappten Zustand der Querliege und vorzugsweise bei 180° gedrehtem Beifahrersitz entsteht mithin auf der Beifahrersitzseite rückwärtig ein Freiraum, der entweder für einen Klapptisch oder für einen Waschplatz genutzt werden kann. Soll der Tisch benutzt werden, so wird vom senkrecht stehenden Bett der Tisch einschließlich unterseitig dicht befestigtem Waschbecken in die Waagerechte geklappt. Soll das Waschbecken benutzt werden, verbleibt der Tisch einschließlich Querliege in der Senkrechten, und es wird nur das Waschbecken in die Waagerechte geklappt.

Es wird also ein nur relativ kurzzeitig benutztes Element der Fahrerhausausstattung, nämlich das Waschbecken, platzsparend im Gesamtkonzept der Campingeinbauten auf der Fahrerhausrückseite realisiert. Es behindert in seiner Anordnung nicht die übergeordneten Funktionen in diesem Raum, nämlich die Bett- oder Schlaffunktion oder die Tisch- bzw. Arbeitsfunktion, die beide, ihrer größeren Bedeutung nach, auch einfacher erreichbar sind.

Die Erfindung wird nachfolgend anhand von Ausführungsbeispielen unter Bezugnahme auf beigefügte Zeichnung näher erläutert; es zeigen:

Fig. 1 den Innenraum eines Lkw-Fahrerhauses mit der Erfindung bei heruntergeklappter hinterer Querliege in schematischer perspektivischer Darstellung,

Fig. 2 die Ausführungsform nach Fig. 1 bei hochgeklappter hinterer Querliege,

Fig. 3 die Ausführungsform nach Fig. 2 mit heruntergeklapptem Tisch,

Fig. 4 die Ausführungsform nach Fig. 2 mit heruntergeklapptem Waschbecken, und

Fig. 5 eine Ausführungsvariante ähnlich Fig. 2 in größerer Einzelheit.

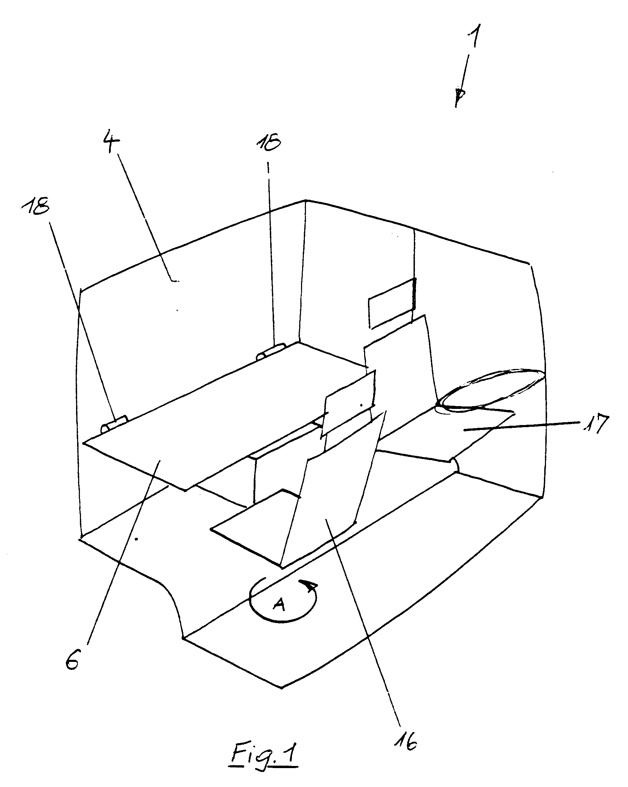

Gemäß Zeichnung umfaßt ein Lkw-Fahrerhaus (1) hinter dem Fahrersitz (17) und dem Beifahrersitz (16) eine untere Querliege (6), die sich praktisch über die gesamte Fahrerhausbreite erstreckt. Die Querliege (6) ist über Schwenkscharniere (18) an der Fahrerhausrückwand (4) angelenkt und kann aus einer horizontalen Benutzungsstellung gemäß Fig. 1 in eine im wesentlichen vertikale Nichtbenutzungsstellung in Schwenkrichtung B nach oben geklappt und dort mittels zentraler Arretiervorrichtung (19) arretiert werden.

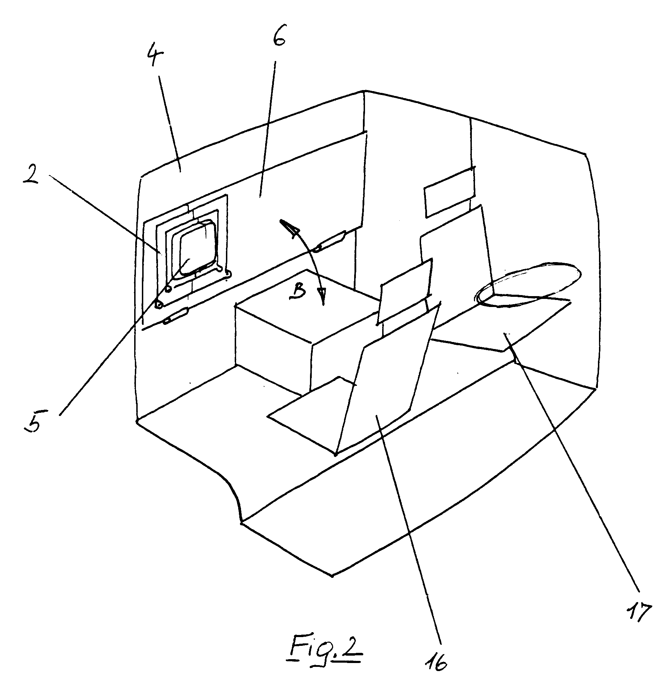

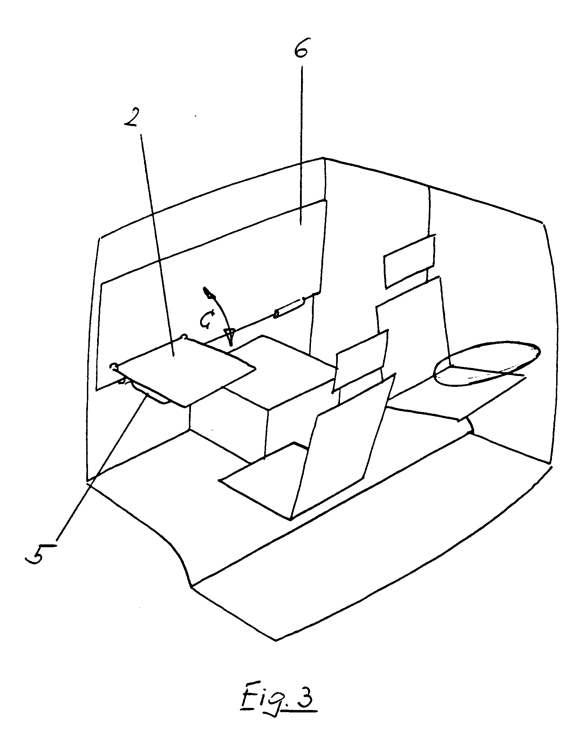

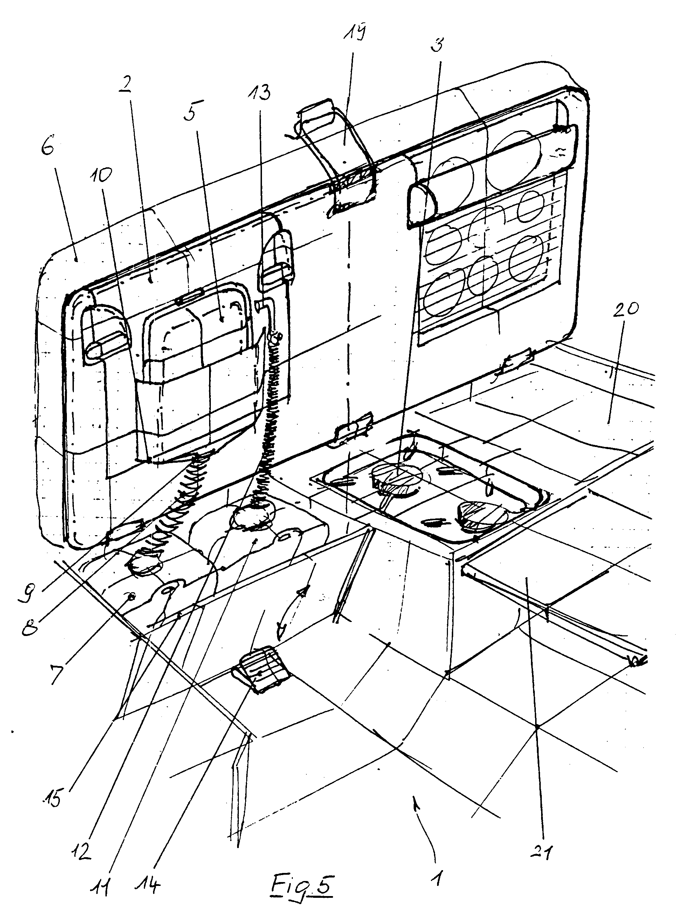

An der Unterseite der Querliege (6) befindet sich auf der Beifahrerseite ein hieran angelenkter Klapptisch (2), der aus einer im wesentlichen senkrechten parallel zur Fahrerhausrückwand (4) hochgeklappten Nichtbenutzungslage gemäß Fig. 2 und 5 in eine im wesentlichen horizontale Benutzungslage gemäß Fig. 3 in Schwenkrichtung C heruntergeschwenkt werden kann. Die Schwenkachse des Klapptisches (2) verläuft hierbei achsparallel zur Schwenkachse der Schwenkscharniere (18) der klappbaren Querliege (6), wobei beide vorgenannten Schwenkachsen dicht beieinanderliegen.

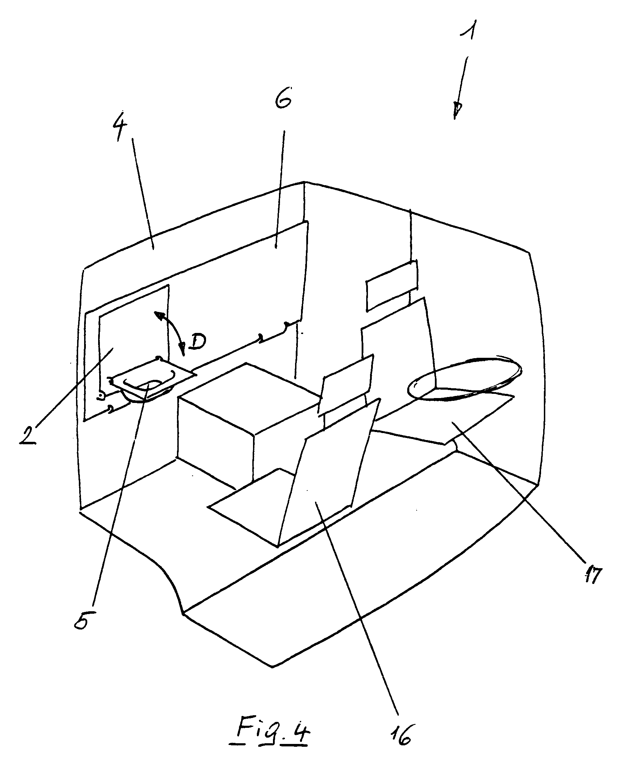

An der Unterseite des Klapptisches (2) befindet sich ferner ein Waschbecken (6), das gemäß Fig. 2 aus einer im wesentlichen senkrechten Nichtbenutzungslage in eine im wesentlichen horizontale Benutzungslage gemäß Fig. 4 in Schwenkrichtung D heruntergeschwenkt werden kann. Die Schwenkachse des Waschbeckens (5) verläuft hierbei ebenfalls achsparallel zu den erstgenannten beiden Schwenkachsen der Querliege (6) und des Klapptisches (2), wobei letztgenannte Schwenkachse dicht beabstandet zur Schwenkachse des Klapptisches (2) verläuft.

Wie den Fig. 1 bis 4 zu entnehmen ist, ist der Beifahrersitz (16) um eine im wesentlichen vertikal verlaufende zentrale Hochachse um zumindest 180° in Drehrichtung A verschwenkbar, so daß der Beifahrersitz mit seiner Rückenlehne zur Windschutzscheibe hin postiert, d.h. der Sitz zum Klapptisch (2) bzw. zum Waschbecken (5) hin angeordnet werden kann. Die Gesamtanordnung des Klapptisches (2), des Waschbeckens (5) und des Beifahrersitzes (16) ist so getroffen, daß eine auf dem nach hinten geschwenkten Beifahrersitz (16) sitzende Person bequem einen heruntergeklappten Klapptisch (2) gemäß Fig. 3 als Arbeitstisch und auch ein gemäß Fig. 4 heruntergeklapptes Waschbecken (5) bequem zum Waschen od.dgl. benützen kann. Unter der Querliege (6) sind als feste Campingeinbauten auf der Fahrerseite Fächer (20) od.dgl. sowie im Konsolenbereich ein Herd (3) angeordnet, der mittels Abdeckplatte (21) bei hochgeklappter Querliege (6) abgedeckt werden kann.

Auf der Beifahrerseite sind unter der Querliege (6) keine oder nur wenige feste Campingeinbauteile vorgesehen, um genügend Fußraum für eine Person zu schaffen, die auf dem nach hinten geschwenkten Beifahrersitz (16) sitzt. Derartig fest installierte Einbauteile auf der Beifahrerseite befinden sich in dichter Nachbarschaft zur Fahrerhausrückwand (4) und sind vorzugsweise ein Frischwasserbehälter (11) und ein Abwasserbehälter (7), die in Form von hochgestellten Kanistern in entsprechenden stationären Fahrerhausabteilen (15) im wesentlichen klapperfest, d.h. formschlüssig aufgenommen sind (vgl. Fig. 5).

Der Frischwasserbehälter (11) ist mittels flexiblem Schlauchstück (12) mit einem Wasserzuführrohr (13) (Wasserhahn) verbunden, wobei ein Wasserzuführrohr (13) in seiner Nichtbenutzungsstellung an der Unterseite des Klapptisches (2) lösbar befestigt werden kann. Der Frischwasserbehälter (11) ist ferner mittels Fußpedal (14) im Fußraum auf der Beifahrersitzseite pumpenmäßig verbunden, so daß bei einer Betätigung des Fußpedals (14) durch eine auf der Beifahrersitzseite sitzende oder stehende Person Wasser aus dem Frischwasserbehälter (11) in ein heruntergeklapptes Waschbecken (5) gemäß Fig. 4 bei entsprechender Haltung des Wasserzuführrohrs (13) gepumpt werden kann.

Am Boden des Waschbeckens (5) im Bereich der Schwenkseite (10) des Waschbeckens befindet sich eine Abflußöffnung (9), die über einen flexiblen Schlauch (8) mit dem Abwasserbehälter (7) verbunden ist. Sofern die Abflußöffnung (9) nicht verschlossen ist, fließt mithin das Wasser im Waschbecken (5) vollständig in den Abwasserbehälter (7) ab, und zwar sowohl in der Benutzungslage des Waschbeckens (5) gemäß Fig. 4 als auch in der Nichtbenutzungslage des Waschbeckens gemäß Fig. 5.

Die Behälter (7 und 11) können leicht aus den stationären Fahrerhausabteilen (15) entfernt und nach entsprechender Füllung mit Frischwasser bzw.Entleerung des Abwassers wieder am gleichen Ort plaziert werden.

In vorteilhafter Weiterbildung der Erfindung ist vorgesehen, daß die Behälter (7 und 11) von der Fahrerhaus-Außenseite her zugänglich sind. In letztgenanntem Fall können mithin die Behälter (7 und 11) auch bei heruntergeklappter Querliege (6) ausgetauscht werden.

Mithin wird durch die Erfindung ein optimaler Waschplatz für Fahrer und Beifahrer in das Gesamtkonzept der Nutzung des rückwärtigen Kabinenraums dergestalt eingebunden, daß er zusätzliche Funktionen in diesem Bereich nicht behindert, selbst aber bei Bedarf in einfacher Weise zugänglich ist und optimal bedient werden kann. Die übergeordnete Funktion des Ruhens oder Schlafens auf einem heruntergeklappten Bett sowie die übergeordnete Funktion der Benutzung eines heruntergeklappten Klapptisches (2) bleiben erhalten.

**Patentansprüche**

1. Klappbares Waschbecken (5) in einem Fahrzeug, insbesondere in einem Lastkraftwagen-Fahrerhaus (1),
   dadurch gekennzeichnet,
   daß das Waschbecken (5) an der Unterseite eines eine Auflagefläche aufweisenden Klappelements (2) angelenkt ist, wobei einerseits das Klappelement (2) aus einer im wesentlichen vertikalen Lage in eine im wesentlichen horizontale Benutzungslage und andererseits das Waschbecken (5) bei im wesentlichen vertikaler Lage des Klappelements (2) in eine im wesentlichen horizontale Benutzungslage heruntergeschwenkt werden kann.

2. Klappbares Waschbecken nach Anspruch 1,
   dadurch gekennzeichnet,
   daß das Klappelement ein Klapptisch (2) ist, der an einer im wesentlichen vertikalen Fahrzeugwand befestigt ist.

3. Klappbares Waschbecken nach Anspruch 1 oder 2,
   dadurch gekennzeichnet,
   daß das Klappelement mit klappbarem Waschbecken (5) an einer im wesentlichen vertikalen Rückwand (4) eines Lkw-Fahrerhauses schwenkbar befestigt ist.

4. Klappbares Waschbecken nach Anspruch 3, dadurch gekennzeichnet, daß auf der Beifahrerseite fahrerhausrückseitig ein Klappelement in Form eines Klapptisches (2) vorgesehen ist, der seinerseits an der Unterseite einer hinteren hochklappbaren Querliege (6) des Fahrerhauses schwenkbar angelenkt ist, wobei der Klapptisch (2) in der Nichtbenutzungslage der hochgeklappten Querliege (6) in eine im wesentlichen horizontale Benutzungslage heruntergeschwenkt werden kann.

5. Klappbares Waschbecken nach Anspruch 4, dadurch gekennzeichnet, daß dem Klapptisch (2) und dem Waschbekken (5) ein verstellbarer Beifahrersitz dergestalt zugeordnet ist, daß dieser durch eine Person bei einer Benutzung des heruntergeklappten Klapptisches (2) oder des heruntergeklappten Waschbeckens (5) benutzt werden kann.

6. Klappbares Waschbecken nach Anspruch 5, dadurch gekennzeichnet, daß die Rückenlehne auf die Sitzfläche des Beifahrersitzes (16) herunterklappbar ausgebildet ist.

7. Klappbares Waschbecken nach Anspruch 5, dadurch gekennzeichnet, daß der Beifahrersitz (16) um eine zentrale Hochachse um zumindest 180° verschwenkt werden kann (Fig. 1).

8. Klappbares Waschbecken nach einem der Ansprüche 5 bis 7, dadurch gekennzeichnet, daß unter dem Klapptisch (2) auf der Beifahrersitzseite im Bereich der Fahrerhaus-Rückwand (4) ein Abwasserbehälter (7) vorgesehen ist, der über einen flexiblen Schlauch (8) mit einer Waschbecken-Abflußöffnung (9) verbunden ist.

9. Klappbares Waschbecken nach einem der Ansprüche 5 bis 8, dadurch gekennzeichnet, daß unter dem Klapptisch (2) auf der Beifahrersitzseite im Bereich der Fahrerhausrückwand (4) ein Frischwasserbehälter (11) vorgesehen ist.

10. Klappbares Waschbecken nach Anspruch 9, dadurch gekennzeichnet, daß der Frischwasserbehälter (11) über ein flexibles Schlauchstück (12) mit einem Wasserzuführrohr (13) verbunden ist.

11. Klappbares Waschbecken nach Anspruch 10, dadurch gekennzeichnet, daß das Wasserzuführrohr (13) in seiner Nichtbenutzungslage an der Unterseite des Klapptisches (2) oder am Waschbecken (5) lösbar befestigbar ist und bei heruntergeklapptem Waschbecken über den Waschbeckenrand von Hand führbar ist, um mittels Pumpe Wasser aus dem Frischwasserbehälter (11) ins Waschbecken (5) zu pumpen.

12. Klappbares Waschbecken nach Anspruch 11, dadurch gekennzeichnet, daß eine Elektropumpe vorgesehen ist.

13. Klappbares Waschbecken nach Anspruch 11, dadurch gekennzeichnet, daß eine über ein Fußpedal (14) von einer Benutzungsperson des Waschbeckens (5) betätigbare Pumpe vorgesehen ist.

14. Klappbares Waschbecken nach einem der Ansprüche 11 bis 13, dadurch gekennzeichnet, daß das Wasserzuführrohr (13) in einer Haltevorrichtung an der Unterseite des hochgeklappten Klapptisches (2) mit Abstand über dem heruntergeklappten Waschbecken (5) lösbar befestigbar ist.

15. Klappbares Waschbecken nach einem der Ansprüche 8 bis 14, dadurch gekennzeichnet, daß Abwasserbehälter (7) und Frischwasserbehälter (11) in hinteren Fahrerhausabteilen (15) lösbar aufgenommen sind.

16. Klappbares Waschbecken nach einem der Ansprüche 8 bis 15, dadurch gekennzeichnet, daß Abwasserbehälter (7) und/oder Frischwasserbehälter (11) von der Fahrerhausaußenseite her zugänglich oder austauschbar angeordnet sind.

17. Klappbares Waschbecken nach einem der Ansprüche 1 bis 16, dadurch gekennzeichnet, daß die Waschbecken-Abflußöffnung (9) auf der Schwenkseite (10) des Waschbeckens (5) angeordnet ist (Fig. 5).

**18.** Klappbares Waschbecken nach einem der Ansprüche 2 bis 17,
dadurch gekennzeichnet,
daß dem heruntergeklappten Waschbecken (5) ein an der Unterseite des Klapptisches (2) befestigter Spiegel zugeordnet ist.

**19.** Klappbares Waschbecken nach einem der Ansprüche 4 bis 18,
dadurch gekennzeichnet,
daß dem heruntergeklappten Waschbecken (5) und/oder dem heruntergeklappten Klapptisch (2) eine an der Unterseite der Querliege (6) befestigte Leuchte und/oder Steckdose zugeordnet ist/sind.

**20.** Klappbares Waschbecken nach einem der Ansprüche 4 bis 19,
dadurch gekennzeichnet,
daß eine gemeinsame Schwenkachse für den Klapptisch (2) und das Waschbecken (5) und/oder die Querliege (6) vorgesehen ist.

## Claims

**1.** A pivotable wash basin (5) in a vehicle, especially in a lorry driver's cab (1),
characterised in that
the wash basin (5) is pivotably attached to the underside of a flap element (2) having a support surface, in which on the one hand the flap element (2) can be swung down from a substantially vertical position into a substantially horizontal position for use and on the other hand the wash basin (5), with a substantially vertical position of the flap element (2), can be swung down into a substantially horizontal position for use.

**2.** A pivotable wash basin according to Claim 1,
characterised in that
the flap element is a pivotable table (2), which is secured to a substantially vertical wall of the vehicle.

**3.** A pivotable wash basin according to Claim 1 or 2,
characterised in that
the flap element with the pivotable wash basin (5) is secured so as to be able to be swivelled on a substantially vertical rear wall (4) of a lorry driver's cab.

**4.** A pivotable wash basin according to Claim 3,
characterised in that
on the passenger side to the rear side of the driver's cab, a flap element is provided in the form of a pivotable table (2), which in turn is pivotable so as to be able to swivel on the underside of a rear transverse couch (6) of the driver's cab, which couch is able to be swung up, in which the pivotable table (2) in the position of non use of the transverse couch (6) in which it is swung up, can be swung down into a substantially horizontal position for use.

**5.** A pivotable wash basin according to Claim 4,
characterised in that
an adjustable passenger seat is associated with the pivotable table (2) and the wash basin (5) such that this passenger seat can be used by a person when using the pivotable table (2) which has been swung down, or the wash basin (5) which has been swung down.

**6.** A pivotable wash basin according to Claim 5,
characterised in that
the backrest is constructed so as to be able to be swung down onto the seat surface of the passenger seat (16).

**7.** A pivotable wash basin according to Claim 5,
characterised in that
the passenger seat (16) can be swivelled about a central vertical axis through at least 180° (Fig. 1).

**8.** A pivotable wash basin according to one of Claims 5 to 7, characterised in that
a waste water container (7) is provided under the pivotable table (2) on the passenger seat side in the region of the rear wall (4) of the driver's cab, which waste water container is connected via a flexible hose (8) with a wash basin drainage opening (9).

**9.** A pivotable wash basin according to one of Claims 5 to 8, characterised in that
a fresh water container (11) is provided under the pivotable table (2) on the passenger seat side in the region of the rear wall (4) of the driver's cab.

**10.** A pivotable wash basin according to Claim 9,
characterised in that
the fresh water container (11) is connected, via a flexible hose piece (12), to a water supply pipe (13).

**11.** A pivotable wash basin according to Claim 10,
characterised in that
the water supply pipe (13) in its position of non use is able to be detachably secured to the underside of the pivotable table (2) or on the wash basin (5), and when the wash basin is swung down, is able to be guided by hand over the edge of the wash basin, in order to pump water out of the fresh water container (11) into the wash basin (5) by means of a pump.

12. A pivotable wash basin according to Claim 11, characterised in that an electric pump is provided.

13. A pivotable wash basin according to Claim 11, characterised in that a pump is provided which is able to be actuated by means of a foot pedal (14) by a person using the wash basin (5).

14. A pivotable wash basin according to one of Claims 11 to 13, characterised in that the water supply pipe (13) is able to be detachably secured in a holding device, at a distance above the wash basin (5) with the latter swung down, on the underside of the pivotable table (2) with the latter swung up.

15. A pivotable wash basin according to one of Claims 8 to 14, characterised in that the waste water container (7) and fresh water container (11) are detachably held in rear compartments (15) of the driver's cab.

16. A pivotable wash basin according to one of Claims 8 to 15, characterised in that the waste water container (7) and/or the fresh water container (11) are accessible from the exterior of the driver's cab or are arranged so as to be exchangeable.

17. A pivotable wash basin according to one of Claims 1 to 16, characterised in that the wash basin drainage opening (9) is arranged on the swivel side (10) of the wash basin (5) (Fig. 5).

18. A pivotable wash basin according to one of Claims 2 to 17, characterised in that there is associated with the wash basin (5), with the latter swung down, a mirror which is attached to the underside of the pivotable table (2).

19. A pivotable wash basin according to one of Claims 4 to 18, characterised in that there is/are associated with the wash basin (5)

with the latter swung down, and/or the pivotable table (2) with the latter swung down, a light and/or a socket secured to the underside of the transverse couch (6).

20. A pivotable wash basin according to one of Claims 4 to 19, characterised in that a common swivel axis is provided for the pivotable table (2) and the wash basin (5) and/or the transverse couch (6).

**Revendications**

1. Cuvette basculante (5) pour véhicule notamment pour une cabine (1) de camion, caractérisée en ce que la cuvette (5) est articulée contre la face inférieure d'un élément basculant (2) comportant une surface d'appui, d'une part, l'élément basculant (2) pouvant être basculé d'une position essentiellement verticale dans une position d'utilisation essentiellement horizontale et par ailleurs, la cuvette (5) pouvant être descendue d'une position essentiellement verticale de l'élément basculant 2 dans une position d'utilisation essentiellement horizontale.

2. Cuvette basculante selon la revendication 1, caractérisée en ce que l'élément basculant est une table basculante (2) qui est fixée à la paroi essentiellement verticale du véhicule.

3. Cuvette basculante selon la revendication 1 ou 2, caractérisée en ce que l'élément basculant est fixé de manière basculante avec la cuvette basculante (5) à la paroi arrière (4) essentiellement verticale d'une cabine de camion.

4. Cuvette basculante selon la revendication 3, caractérisée en ce que sur le côté arrière de la cabine du camion, du côté du passager, il est prévu un élément basculant en forme de table basculante (2) qui est articulé de manière basculante contre la face inférieure d'un lit transversal (6) arrière, relevable dans la cabine, la table basculante (2) pouvant être descendue en position de non utilisation du lit (6) relevé, pour passer dans une position d'utilisation essentiellement horizontale.

5. Cuvette basculante selon la revendication 4, caractérisée en ce qu'à la table basculante (2) et à la cuvette (5) est associé un siège de passager réglable qui peut être utilisé par une personne se servant de la table basculante (2), descendue ou de la cuvette (5) en position descendue.

**6.** Cuvette basculante selon la revendication 5, caractérisée en ce que le dossier peut être rabattu sur la surface du siège du passager (16).

**7.** Cuvette basculante selon la revendication 5, caractérisée en ce que le siège de passager (16) peut être pivoté d'au moins 180° autour d'un axe central, montant (figure 1).

**8.** Cuvette basculante selon l'une des revendications 5 à 7, caractérisée en ce que sous la table basculante (2), du côté du siège du passager, au niveau de la paroi arrière (4) de la cabine, il est prévu un réservoir d'eau usée (7) qui est relié à un orifice de sortie (9) de la cuvette par un tuyau souple (8).

**9.** Cuvette basculante selon l'une des revendications 5 à 8, caractérisée en ce que sous la table basculante (2), du côté du passager, au niveau de la paroi arrière (4) de la cabine, il est prévu un réservoir d'eau fraîche (11).

**10.** Cuvette basculante selon la revendication 9, caractérisée en ce que le réservoir d'eau fraîche (11) est relié par un tuyau souple (12) au tuyau d'alimentation d'eau (13).

**11.** Cuvette basculante selon la revendication 10, caractérisée en ce que le tuyau d'alimentation en eau (13) est fixé de manière amovible en position de non utilisation contre la face inférieure de la table basculante (2) ou de la cuvette (5) et lorsque la cuvette est descendue, il est mis manuellement par-dessus le bord de la cuvette pour pomper de l'eau à partir du réservoir d'eau fraîche (11) dans la cuvette (5) à l'aide de la pompe.

**12.** Cuvette basculante selon la revendication 11, caractérisée en ce qu une pompe électrique est prévue.

**13.** Cuvette basculante selon la revendication 11, caractérisée en ce qu une pompe actionnée par l'intermédiaire d'une pédale (14) par l'utilisateur de la cuvette (5) est prévue.

**14.** Cuvette basculante selon l'une des revendications 11 à 13, caractérisée en ce que le tuyau d'alimentation d'eau (13) peut être fixé de manière amovible dans un dispositif de fixation contre la face inférieure de la table basculante (2), relevée, à une certaine distance au-dessus de la cuvette (5), descendue.

**15.** Cuvette basculante selon l'une des revendications 8 à 14, caractérisée en ce que le réservoir d'eau usée (7) et le réservoir d'eau fraîche (11) sont placés de manière amovible dans des compartiments (15) prévus dans la partie arrière de la cabine.

**16.** Cuvette basculante selon l'une des revendications 8 à 15, caractérisée en ce que le réservoir d'eau usée (7) et/ou le réservoir d'eau fraîche (11) sont accessibles ou interchangeables à partir du côté extérieur de la cabine.

**17.** Cuvette basculante selon l'une des revendications 1 à 16, caractérisée en ce que l'orifice de sortie (9) de la cuvette est situé du côté du basculement (10) de la cuvette (5) (figure 5).

**18.** Cuvette basculante selon l'une des revendications 2 à 17, caractérisée en ce qu un miroir fixé sur le côté inférieur de la table basculante (2) est associé à la cuvette (5) descendue.

**19.** Cuvette basculante selon l'une des revendications 4 à 18, caractérisée en ce qu'à la cuvette (5) descendue et/ou la table basculante (2), descendue, il est prévu un dispositif d'éclairage et/ou une prise fixée sur le côté inférieur du lit transversal (6).

**20.** Cuvette basculante selon l'une des revendications 4 à 19, caractérisée par un axe de basculement commun à la table basculante (2) et à la cuvette (5) et/ou au lit transversal (6).

Fig.1

Fig. 2

Fig. 3

Fig.4

Fig.5